# EUROPEAN PATENT APPLICATION

(11) **EP 4 694 248 A1**
(43) Date of publication of application: **11.02.2026**
(21) Application number: 23931654.0
(22) Date of filing: 19.05.2023
(51) Int. Cl.: H04W 8/26, H04W 4/35

(54) **LCD SHELF LABEL, LCD SHELF LABEL SYSTEM, AND COMMUNICATION METHOD**

(30) Priority: 04.04.2023 CN 202310363070
(71) Applicant: Hanshow Technology Co., Ltd., Jiaxing, Zhejiang 314031 (CN)
(72) Inventor: SHEN, Ming, Jiaxing, Zhejiang 314031 (CN); WEI, Sibing, Jiaxing, Zhejiang 314031 (CN); ZHAO, Yawen, Jiaxing, Zhejiang 314031 (CN)
(74) Representative: IP TRUST SERVICES
(86) International application number: PCT/CN2023/095245
(87) International publication number: WO 2024/207598

(57) **Abstract**

The present disclosure provides an LCD shelf label, an LCD shelf label system and a communication method therefor. The communication method includes: sending, by a server, a target IP address and a non-numerical information download address to a narrowband communication module of a first target LCD shelf label through a narrowband base station, so that a broadband communication module of the first target LCD shelf label establishes a broadband communication path with the server through a broadband base station according to the target IP address, and the first target LCD shelf label downloads non-numerical update information from the server through the broadband communication path according to the non-numerical information download address; and the server releases the target IP address into an IP management pool after the non-numerical update information is downloaded. Dynamically allocating limited IP addresses, the present disclosure may reduce the large demand for broadband IP addresses in a store without affecting the normal communication of the LCD shelf label, thereby reducing the demand for broadband base stations, which not only reduces the device cost of the store, but also brings convenience to the daily wireless network management.

## Description

### RELATED APPLICATION

The present disclosure claims priority to Chinese Patent Application NO. 202310363070.2, filed on April 04, 2023, which is hereby incorporated by reference its entirety.

### TECHNICAL FIELD

The present disclosure relates to the technical field of wireless communications, and particularly to an LCD shelf label, an LCD shelf label system and a communication method therefor.

### BACKGROUND

The dynamic Liquid Crystal Display (LCD) shelf label is an important link for the traditional retailers to proceed with the new retail digitalization. The Internet of Things system of dynamic LCD shelf labels deployed in a store traditionally interacts with a backend cloud through a public broadband wireless network system of the store. With the characteristics of high bandwidth, low latency and large amount of data transmission, the broadband system is suitable for the dynamic LCD shelf label to download multimedia data files in real time for playing.

However, each LCD shelf label terminal device needs a broadband IP address provided by the store. With the increasing scale of the store, each large or medium-scaled store usually needs to be deployed with hundreds of dynamic LCD shelf labels in the new retail digitalization, which requires the store to provide more broadband IP addresses for the LCD shelf labels. Thus, the store needs to change the original public broadband network and add more wireless Access Points (AP) to provide enough broadband IP addresses for the deployed Internet of Things system of dynamic LCD shelf labels, which not only increases the device cost of the store in the new retail digitalization, but also brings great challenges to the daily wireless network management.

### SUMMARY

Aiming at the disadvantages in the prior art, this present disclosure provides an LCD shelf label, an LCD shelf label system and a communication method therefor to solve the problem in the prior art that the LCD shelf label system has a large demand for broadband IP addresses. By dynamically allocating limited IP addresses, the present disclosure can reduce the large demand for broadband IP addresses in a store without affecting the normal communication of the LCD shelf label, thereby reducing the demand for broadband base stations, which not only reduces the device cost of the store, but also brings convenience to the daily wireless network management.

In a first aspect, the present disclosure provides a communication method for an LCD shelf label system. The method is applied to the LCD shelf label system including an LCD shelf label with a narrowband communication module and a broadband communication module, a narrowband base station, a broadband base station and a server. The method includes: selecting, by the server, one target IP address from an IP management pool when the server receives a non-numerical information update instruction, in which the non-numerical information update instruction includes an ID identification of a first target LCD shelf label and a non-numerical information download address. Sending, by the server, the target IP address and the non-numerical information download address to the narrowband communication module of the first target LCD shelf label through the narrowband base station based on the ID identification in the non-numerical information update instruction, so that the broadband communication module of the first target LCD shelf label establishes a broadband communication path with the server through the broadband base station according to the target IP address, and the first target LCD shelf label downloads non-numerical update information from the server through the broadband communication path according to the non-numerical information download address; and releasing, by the server, the target IP address into the IP management pool, after the non-numerical update information is downloaded.

Optionally, when the server receives a numerical information update instruction, the method further includes: sending, by the server, numerical update information in the numerical information update instruction to a second target LCD shelf label through the narrowband base station based on an ID identification in the numerical information update instruction, so that the second target LCD shelf label updates according to the numerical update information.

Optionally, the step of releasing, by the server, the target IP address into the IP management pool, after the non-numerical update information is downloaded includes: receiving, by the server, a broadband network shutdown instruction sent by the LCD shelf label through the broadband base station, after the non-numerical update information is downloaded; putting, by the server, the target IP address into a release-waiting IP pool; and moving, by the server, the target IP address from the release-waiting IP pool into an available IP pool, when the server receives an IP release heartbeat sent by the LCD shelf label through the narrowband base station. The IP management pool includes the release-waiting IP pool and the available IP pool.

Optionally, the step of selecting, by the server, one target IP address from the IP management pool includes: acquiring, by the server, one IP address from the available IP pool as the target IP address, when there is an idle IP address in the available IP pool; and acquiring, by the server, an IP address from the release-waiting IP pool that has been put in the release-waiting IP pool for a longest time as the target IP address, when there is no idle IP address in the available IP pool.

Optionally, before the step of selecting, by the server, one target IP address from the IP management pool when the server receives the non-numerical information update instruction, the method further includes: establishing, by the server, a narrowband communication path with the narrowband communication module of the LCD shelf label through the narrowband base station. Receiving, by the server, a normal heartbeat reported by the LCD shelf label through the narrowband communication path, and making, by the server, a product registration for the LCD shelf label based on the normal heartbeat; and issuing, by the server, network configuration information to the LCD shelf label through the narrowband communication path, so that the LCD shelf label configures a broadband network according to the network configuration information.

In a second aspect, the present disclosure provides an LCD shelf label, including a narrowband communication module, a message gateway, a broadband communication module and a controller. The narrowband communication module is configured to receive a target IP address, a non-numerical information download address and a numerical information sent by a server through a narrowband base station. The message gateway is connected to the narrowband communication module, the broadband communication module and the controller, respectively, and is configured to start up the broadband communication module according to the target IP address, and send the non-numerical information download address and the numerical information that have been performed with a data conversion respectively to the controller. The broadband communication module is configured to establish a broadband communication path with the server through a broadband base station according to the target IP address, so that the controller acquires non-numerical update information from the server according to the non-numerical information download address.

Optionally, the LCD shelf label further includes a transparent transmission module, which is connected to the narrowband communication module and the message gateway, respectively, and is configured to perform a data transparent transmission between the message gateway and the narrowband communication module according to an UART-based near field communication protocol.

Optionally, the narrowband communication module includes an ESL module or a Zigbee module.

Optionally, the broadband communication module includes a WIFI module.

In a third aspect, the present disclosure provides an LCD shelf label system, including an LCD shelf label, a narrowband base station, a broadband base station and a server. The server is configured to establish a narrowband communication path with the narrowband communication module of the LCD shelf label through the narrowband base station, select one target IP address from an IP management pool when receiving a non-numerical information update instruction, and send the target IP address and the non-numerical information download address in the non-numerical information update instruction to the LCD shelf label through the narrowband communication path. The LCD shelf label is configured to establish a broadband communication path with the server through the broadband base station according to the target IP address, download non-numerical update information from the server through the broadband communication path according to the non-numerical information download address, and release the target IP address so that the server puts the target IP address into the IP management pool.

Compared with the prior art, the present disclosure has the following advantageous effects:

The LCD shelf label of the present disclosure establishes a narrowband communication path for continuous communication with the server through a narrowband base station. The server selects one target IP address from an IP management pool when receiving a non-numerical information update instruction, and sends the target IP address to a designated LCD shelf label through the narrowband communication path, so that the LCD shelf label establishes a short-term broadband communication path with the server, and downloads non-numerical update information from the server through the broadband communication path. After the download is completed, the broadband communication path is shut down, and the target IP address is released into the IP management pool, so that the server allocates the target IP address to another shelf label. Therefore, by dynamically allocating limited IP addresses, the present disclosure can reduce the large demand for broadband IP addresses in a store without affecting the normal communication of the LCD shelf label, thereby reducing the demand for broadband base stations, which not only reduces the device cost of the store, but also brings convenience to the daily wireless network management.

### BRIEF DESCRIPTION OF THE DRAWINGS

To provide a clearer illustration of the technical solutions in the embodiments of the present disclosure or in the prior art, the drawings required for describing the embodiments or prior art will be briefly introduced below.
FIG. 1 illustrates a flowchart of a communication method for an LCD shelf label according to an embodiment of the present disclosure;
FIG. 2 illustrates a schematic structural diagram of an LCD shelf label system according to an embodiment of the present disclosure;
FIG. 3 illustrates a logical block diagram of an LCD shelf label system according to an embodiment of the present disclosure; and
FIG. 4 illustrates a flowchart of another communication method for an LCD shelf label according to an embodiment of the present disclosure.

### DETAILED DESCRIPTION

For a clearer illustration of the objectives, technical solutions and advantages in the embodiments of the present disclosure, a clear and complete description of the technical solutions of the embodiments of the present disclosure will be given below with reference to the drawings for the embodiments of the present disclosure. Obviously, those described are only a part, rather than all, of the embodiments of the present disclosure. Based on these embodiments of the present disclosure, any other embodiment obtained by those of ordinary skill in the art without paying any inventive effort should fall within the protection scope of the present disclosure.

In a first aspect, the present disclosure provides a communication method for an LCD shelf label, which specifically includes the following embodiments.

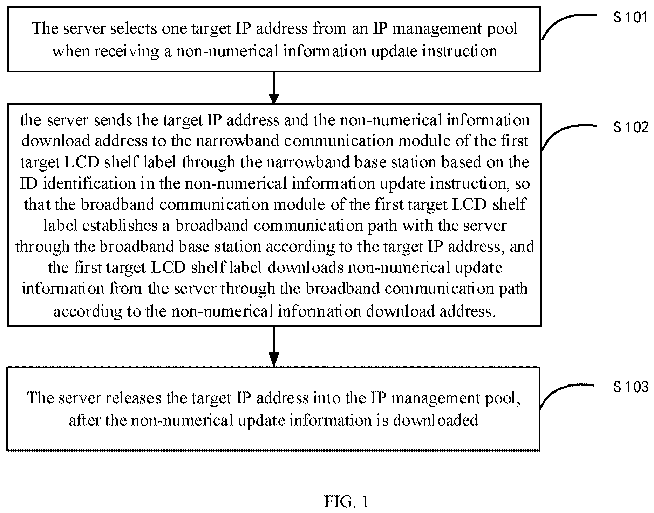

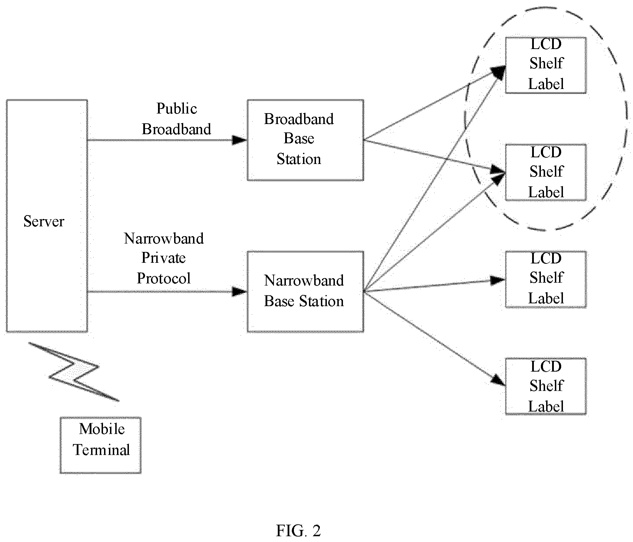

FIG. 1 illustrates a flowchart of a communication method for an LCD shelf label according to an embodiment of the present disclosure, which is applied to an LCD shelf label system as illustrated in FIG. 1. As illustrated in FIG. 2, the LCD shelf label system includes an LCD shelf label with a narrowband communication module and a broadband communication module, a narrowband base station, a broadband base station and a server, and the communication method for the LCD shelf label specifically includes following steps.

Step S101: the server selects one target IP address from an IP management pool when receiving a non-numerical information update instruction.

It should be noted that an information update instruction in this embodiment includes a numerical information update instruction and a non-numerical information update instruction. The numerical information update instruction indicates that only numerical information, such as a commodity price or a commodity inventory, etc., is updated. The non-numerical information update instruction indicates that update content other than the numerical information, such as product pictures, marketing videos, etc., is updated.

The server may receive the non-numerical information update instruction sent by operating software in the server or by a mobile terminal connected to the server. In addition, in an embodiment, the mobile terminal sends an update instruction to the server, which judges whether the update content in the update instruction is only a number change; if not, the server takes the update instruction as a non-numerical information update instruction, otherwise the server takes the update instruction as a numerical information update instruction. In another embodiment, the mobile terminal directly sends a non-numerical information update instruction or a numerical information update instruction to the server.

In this embodiment, the non-numerical information update instruction includes an ID identification of a first target LCD shelf label and a non-numerical information download address. The ID identification of the first target LCD shelf label is an MAC address, a serial number, etc. indicating identity information of the first target LCD shelf label.

In this embodiment, the step of the server selects one target IP address from the IP management pool when receiving a non-numerical information update instruction includes: the server acquires one IP address from an available IP pool as the target IP address, when there is an idle IP address in the available IP pool; and the server acquires an IP address from a release-waiting IP pool that has been put in the release-waiting IP pool for a longest time as the target IP address, when there is no idle IP address in the available IP pool.

It should be noted that the IP management pool in this embodiment includes a release-waiting IP pool and an available IP pool. The available IP pool stores idle IP addresses that are available at any time. The release-waiting IP pool stores IP addresses to be released. The IP address allocation strategy in this embodiment includes a fixed IP allocation mode and a dynamic IP allocation mode.

In the fixed IP allocation mode, there are a limited number of static IP addresses stored in the IP management pool, such as 10 static IPs like 192.168.10.0, 192.168.10.1, 192.168.10.2, etc. If the number N of IP addresses currently allowed by the store is less than 10, the number of IP addresses activated in parallel each time at most is N-1. If N is greater than 10, the number of IP addresses activated in parallel each time is 10. When the server needs to allocate an IP, it firstly selects one IP from the available IP pool, and if there is no available IP in the available IP pool, the server selects from the release-waiting IP pool an IP that has been put therein for a longest time.

In the dynamic IP allocation mode, a limited number of dynamic IPs are stored in the IP management pool, that is, the IP addresses are randomly allocated, and the number of wireless connections is managed by the server. If the number N of wireless connections currently allowed by the store is less than 10, the number of wireless connections activated in parallel each time at most is N-1. If N is greater than 10, the number of wireless connections activated in parallel each time is 10. An available IP counter is maintained in the server. When a value in the available IP counter is greater than zero, it is safe to activate a wireless connection without exceeding the number of wireless connections allowed by the store.

Step S102: the server sends the target IP address and the non-numerical information download address to the narrowband communication module of the first target LCD shelf label through the narrowband base station based on the ID identification in the non-numerical information update instruction, so that the broadband communication module of the first target LCD shelf label establishes a broadband communication path with the server through the broadband base station according to the target IP address, and the first target LCD shelf label downloads non-numerical update information from the server through the broadband communication path according to the non-numerical information download address.

It should be noted that in this embodiment, the narrowband communication module of the LCD shelf label communicates with the narrowband base station according to a narrowband private protocol to establish a narrowband communication path with the server. Therefore, the server, according to the ID identification in the non-numerical information update instruction, sends the target IP address and the non-numerical information download address in the non-numerical information update instruction to the first target LCD shelf label through the narrowband communication path. The first target LCD shelf label configures an IP according to the target IP address, and then establishes a broadband communication path with the server through the broadband communication base station. Next, the first target LCD shelf label downloads the non-numerical update information from the server according to the non-numerical information download address, that is, the server sends the non-numerical update information to the first target LCD shelf label through the broadband communication path, so that the first target LCD shelf label updates the information according to the non-numerical update information.

Step S103: the server releases the target IP address into the IP management pool, after the non-numerical update information is downloaded.

In this embodiment, the step of the server releases the target IP address into the IP management pool after the non-numerical update information is downloaded includes: the server receives a broadband network shutdown instruction sent by the LCD shelf label through the broadband base station, after the non-numerical update information is downloaded; the server puts the target IP address into a release-waiting IP pool; the server moves the target IP address from the release-waiting IP pool into an available IP pool when receiving an IP release heartbeat sent by the LCD shelf label through the narrowband base station.

It should be noted that in the fixed IP allocation mode, the server shuts down the broadband session of the IP and puts the IP into the release-waiting IP pool, when it receives a resource download completion information of the LCD shelf label through the broadband communication path or the information of IP usage being overtime. Next, the server moves the IP from the release-waiting IP pool into the available IP pool, when it detects information of successful release of the IP in a heartbeat packet through the narrowband communication path.

In the dynamic IP allocation mode, the server shuts down the broadband session of the LCD shelf label and increases the value in the available IP counter by 1, when it receives a resource download completion information of the LCD shelf label through the broadband communication path or the information of usage of the wireless connection of the LCD shelf label being overtime.

Compared with the prior art, the present disclosure has the following advantageous effects:
The LCD shelf label of the present disclosure establishes a narrowband communication path for continuous communication with the server through a narrowband base station. The server selects one target IP address from an IP management pool when receiving a non-numerical information update instruction, and sends the target IP address to a designated LCD shelf label through the narrowband communication path, so that the LCD shelf label establishes a short-term broadband communication path with the server, and downloads non-numerical update information from the server through the broadband communication path. After the download is completed, the broadband communication path is shut down, and the target IP address is released into the IP management pool, so that the server allocates the target IP address to another shelf label. Therefore, by dynamically allocating limited IP addresses, the present disclosure can reduce the large demand for broadband IP addresses in a store without affecting the normal communication of the LCD shelf label, thereby reducing the demand for broadband base stations, which not only reduces the device cost of the store, but also brings convenience to the daily wireless network management.

In another embodiment of the present disclosure, when the server receives a numerical information update instruction, the method further includes: the server sends numerical update information in the numerical information update instruction to a second target LCD shelf label through the narrowband base station based on an ID identification in the numerical information update instruction, so that the second target LCD shelf label updates according to the numerical update information.

It should be noted that when the update instruction received by the server is a numerical information update instruction, the server directly sends new numerical information in the numerical information update instruction to a designated second target LCD shelf label through the narrowband communication path according to the ID identification in the numerical information update instruction, so that the designated LCD shelf label can render the new numerical information. Therefore, when only the numerical information is updated, the server can perform a data transmission through the narrowband communication path, thereby reducing the frequency of IP address allocation. In this embodiment, the ID identification in the numerical information update instruction is the ID identification of the designated second target LCD shelf label. In this embodiment, the first target LCD shelf label and the second target LCD shelf label may be the same LCD shelf label or different LCD shelf labels.

In another embodiment of the present disclosure, before the step of the server selects one target IP address from the IP management pool when receiving the non-numerical information update instruction, the method further includes: the server establishes a narrowband communication path with the narrowband communication module of the LCD shelf label through the narrowband base station; the server receives a normal heartbeat reported by the LCD shelf label through the narrowband communication path, and makes a product registration for the LCD shelf label based on the normal heartbeat; the server issues network configuration information to the LCD shelf label through the narrowband communication path, so that the LCD shelf label configures a broadband network according to the network configuration information.

It should be noted that the narrowband communication module of the LCD shelf label joins a narrowband network according to a private protocol to complete the establishment of a narrowband communication path. The LCD shelf label reports the normal heartbeat to the server through the narrowband communication path to complete the product registration for the LCD shelf label of the store. The server issues network configuration information including broadband base station information to the LCD shelf label through the narrowband communication path, so that the LCD shelf label configures broadband network according to the network configuration information. The network configuration information includes but is not limited to a merchant ID, a store code, a wireless SSID (Service Set Identifier), a wireless password, a heartbeat interval, an NTP (Network Time Protocol) server address, an HTTP (Hypertext Transfer Protocol) server address, a store gateway IP, a store DNS (Domain Name System) server IP, an HTTP task interface, an HTTP task response interface, and an HTTP wireless network release interface.

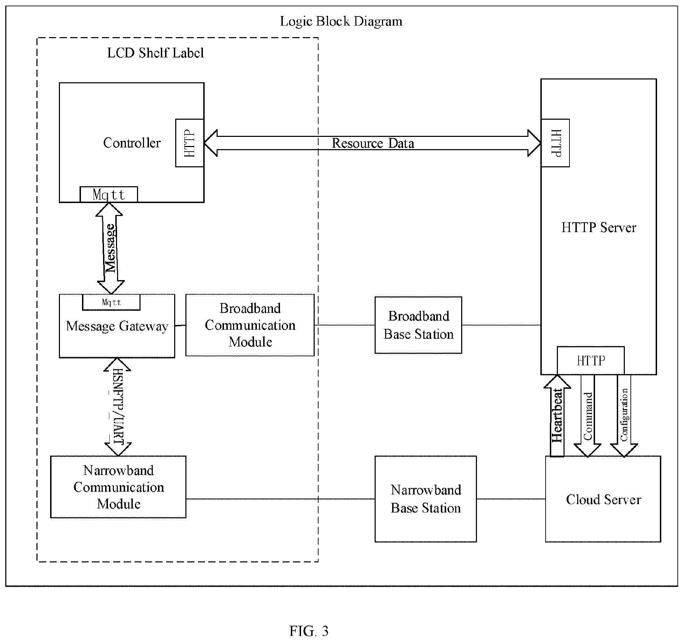

In a second aspect, the present disclosure provides an LCD shelf label as illustrated in FIG. 3, including a narrowband communication module, a message gateway, a broadband communication module and a controller.

The narrowband communication module is configured to receive a target IP address, a non-numerical information download address and a numerical information sent by a server through a narrowband base station.

The message gateway is connected to the narrowband communication module, the broadband communication module and the controller, respectively, and is configured to start up the broadband communication module according to the target IP address, and send the non-numerical information download address and the numerical information that have been performed with a data conversion respectively to the controller.

The broadband communication module is configured to establish a broadband communication path with the server through a broadband base station according to the target IP address, so that the controller acquires non-numerical update information from the server according to the non-numerical information download address.

It should be noted that the narrowband communication module includes an Electronic Shelf Label (ESL) module, and the broadband communication module includes a WIFI module. The message gateway in the LCD shelf label interacts with the ESL module according to a Universal Asynchronous Receiver/Transmitter-based (UART-based) near field communication protocol, and interacts with the controller according to a Message Queuing Telemetry Transport (MQTT) protocol. In this embodiment, the specific functions of the message gateway include: 1) being responsible for the startup and shutdown of the broadband communication module; 2) parsing message data transmitted through a narrowband ESL and a public broadband HTTP, converting the data into an MQTT message format and then transmitting it to the controller; 3) analyzing a normal MQTT heartbeat of the controller, converting the normal MQTT heartbeat into a heartbeat of the narrowband ESL path and then transmitting it to the ESL module; 4) generating an IP release heartbeat and transmitting it to the ESL module when the broadband communication module is shut down.

In this embodiment, the LCD shelf label further includes a transparent transmission module configured to receive data through a private narrowband path, which is detected as the data of the LCD shelf label and then transparently transmitted to the message gateway according to an UART-based near field communication protocol. The transparent transmission module is configured to receive heartbeat data of the message gateway and transmit the heartbeat data to a cloud server through the narrowband communication path.

In this embodiment, the narrowband communication module further includes a Zigbee module, and adopts a customized broadband base station integrated with a Zigbee gateway module. The broadband IP address used by the terminal is managed through the Zigbee network, and a customized broadband base station needs to be added to the broadband network of the client's store.

In a third aspect, the present disclosure provides an LCD shelf label system, which includes the LCD shelf label according to the above embodiments, a narrowband base station, a broadband base station and a server.

The server is configured to establish a narrowband communication path with the narrowband communication module of the LCD shelf label through the narrowband base station, select one target IP address from an IP management pool when receiving a non-numerical information update instruction, and send the target IP address and the non-numerical information download address in the non-numerical information update instruction to the LCD shelf label through the narrowband communication path.

The LCD shelf label is configured to establish a broadband communication path with the server through the broadband base station according to the target IP address, download non-numerical update information from the server through the broadband communication path according to the non-numerical information download address, and release the target IP address so that the server puts the target IP address into the IP management pool.

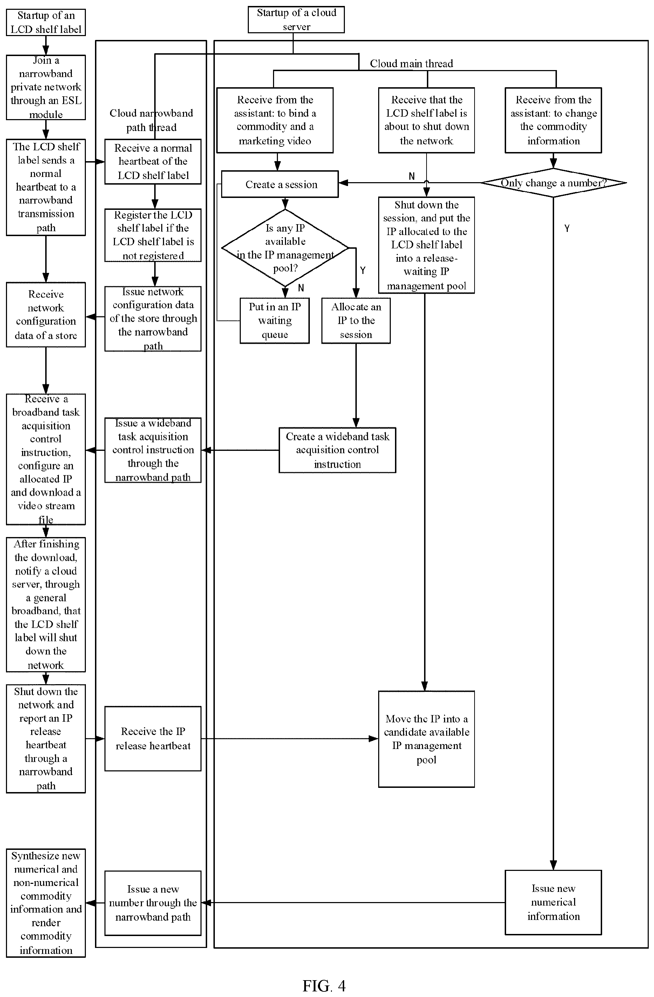

Referring to FIGS. 2 and 4, the specific communication steps of the LCD shelf label system according to this embodiment include:
(1) The LCD shelf label embedded with an ESL module joins a narrowband network through a private protocol to complete ESL networking of the narrowband network and establish a narrowband communication path.
(2) The LCD shelf label embedded with the ESL module reports a normal heartbeat to a cloud server through the narrowband communication path to complete a product registration of the LCD shelf label of the store.
(3) The cloud server issues network configuration information including public wireless AP information (SSID and password) to the LCD shelf label through the narrowband communication path.
(4) A user terminal (e.g. an assistant APP on a mobile phone) is connected to the cloud server to bind a product and a marketing video to an LCD shelf label.
(5) The cloud server creates a session, allocates one target IP address to the LCD shelf label, and issues one control instruction with the target IP address to the LCD shelf label through the narrowband communication path.
(6) The LCD shelf label activates and connects a wireless network to a public broadband wireless AP and configures the target IP address to establish a broadband communication path.
(7) The LCD shelf label downloads tasks and resources according to an HTTP protocol through the broadband communication path.
(8) After finishing the download of tasks and resources, the LCD shelf label notifies the cloud server, through the broadband communication path according to the HTTP protocol, that the terminal device will shut down the network.
(9) The cloud server shuts down the session and puts the target IP address into a release-waiting IP pool.
(10) The LCD shelf label shuts down the wireless network and reports an IP release heartbeat through the narrowband communication path.
(11) After receiving the IP release heartbeat of the LCD shelf label, the cloud server moves the target IP address into an available IP pool.
(12) The commodity information bound to the LCD shelf label is classified into numerical information and non-numerical information, and the commodity information is initially issued through a public broadband network.
(13) When the cloud server only updates the numerical information (e.g., commodity prices), new numerical information is issued to the LCD shelf label through a private narrowband communication path, and the LCD shelf label renders the number.

For example, when the system-configured IP allocation mode is set to dynamic IP allocation mode (e.g. Dynamic Host Configuration Protocol (DHCP)) for LCD shelf label, and the target IP address is 255.255.255.255, the LCD shelf label detects this target IP address, connects to a public broadband wireless AP, and operates in DHCP mode to be dynamically assigned an IP address by the DHCP server.

In this embodiment, the dynamic LCD shelf label joins a private narrowband system through the ESL module; the backend cloud server dynamically allocates broadband target IP addresses to the LCD shelf label, and issues a broadband wireless configuration and a control command to the ESL module through the narrowband. The ESL module performs a transparent transmission to the LCD shelf label through the UART port. After receiving the command, the LCD shelf label starts up the wireless network to make an HTTP interaction with the backend cloud server through a public broadband system, thereby downloading multimedia files. After the download is finished, the LCD shelf label shuts down the wireless network and notifies, through the uplink of the private narrowband system, the backend cloud server to release the broadband target IP address allocated for the LCD shelf label. Thus, when the digitalization and informatization of the new retail store are implemented, the public broadband network of the client's store is seamlessly accessed, and the private narrowband network deployed in the early digitalization of the client's store is fully utilized, so that the client does not need to specifically add any new public broadband network device for the new retail digitalization, thereby saving the deployment cost and the energy consumption cost.

Those of ordinary skills in the art can understand that all or part of the flows in the method of the aforementioned embodiments can be completed by instructing relevant hardware through a computer program that may be stored in a nonvolatile computer-readable storage medium, and when executed, the program can implement the flows of the aforementioned method embodiments. Any reference to a memory, a storage, a database or any other medium adopted in the embodiments of the present disclosure can include a non-volatile memory and/or a volatile memory. The nonvolatile memory may include a read-only memory (ROM), a programmable ROM (PROM), an electrically programmable ROM (EPROM), an electrically erasable programmable ROM (EEPROM) or a flash memory. The volatile memory may include a randomaccess memory (RAM) or an external cache memory. By way of illustration rather than limitation, the RAM is available in various forms, such as a static RAM (SRAM), a dynamic RAM (DRAM), a synchronous DRAM (SDRAM), a double data rate SDRAM (DDRSDRAM), an enhanced SDRAM (ESDRAM), a synch-link DRAM (SLDRAM), a memory bus (Rambus) direct RAM (RDRAM), a direct memory bus dynamic RAM (DRDRAM) and a memory bus dynamic RAM (RDRAM).

It should be noted that herein, the relational terms such as 'first' and 'second' are only used to distinguish one entity or operation from another entity or operation, and do not necessarily require or imply any such actual relationship or sequence between these entities or operations. In addition, the term 'comprise', 'include' or any other variation thereof is intended to cover nonexclusive inclusions, so that a process, method, object or device all of which includes a series of elements includes not only those elements, but also other elements not explicitly listed, or further includes elements inherent to such process, method, object or device. Without further restrictions, an element defined by a statement 'comprising a ...' does not exclude the existence of other identical elements in a process, method, article or device that includes said element.

## Claims

1. A communication method for an LCD shelf label system, wherein the method is applied to the LCD shelf label system comprising an LCD shelf label with a narrowband communication module and a broadband communication module, a narrowband base station, a broadband base station and a server, the method comprising:
selecting, by the server, one target IP address from an IP management pool when the server receives a non-numerical information update instruction, wherein the non-numerical information update instruction comprises an ID identification of a first target LCD shelf label and a non-numerical information download address;
sending, by the server, the target IP address and the non-numerical information download address to the narrowband communication module of the first target LCD shelf label through the narrowband base station based on the ID identification in the non-numerical information update instruction, so that the broadband communication module of the first target LCD shelf label establishes a broadband communication path with the server through the broadband base station according to the target IP address, and the first target LCD shelf label downloads non-numerical update information from the server through the broadband communication path according to the non-numerical information download address; and
releasing, by the server, the target IP address into the IP management pool, after the non-numerical update information is downloaded.

2. The communication method for the LCD shelf label system according to claim 1, wherein when the server receives a numerical information update instruction, the method further comprises:
sending, by the server, numerical update information in the numerical information update instruction to a second target LCD shelf label through the narrowband base station based on an ID identification in the numerical information update instruction, so that the second target LCD shelf label updates according to the numerical update information.

3. The communication method for the LCD shelf label system according to claim 1, wherein the step of releasing, by the server, the target IP address into the IP management pool, after the non-numerical update information is downloaded comprises:
receiving, by the server, a broadband network shutdown instruction sent by the LCD shelf label through the broadband base station, after the non-numerical update information is downloaded;
putting, by the server, the target IP address into a release-waiting IP pool; and
moving, by the server, the target IP address from the release-waiting IP pool into an available IP pool, when the server receives an IP release heartbeat sent by the LCD shelf label through the narrowband base station;
wherein the IP management pool comprises the release-waiting IP pool and the available IP pool.

4. The communication method for the LCD shelf label system according to claim 3, wherein the step of selecting, by the server, one target IP address from the IP management pool comprises:
acquiring, by the server, one IP address from the available IP pool as the target IP address, when there is an idle IP address in the available IP pool; and
acquiring, by the server, an IP address from the release-waiting IP pool that has been put in the release-waiting IP pool for a longest time as the target IP address, when there is no idle IP address in the available IP pool.

5. The communication method for the LCD shelf label system according to claim 1, wherein before the step of selecting, by the server, one target IP address from the IP management pool when the server receives the non-numerical information update instruction, the method further comprises:
establishing, by the server, a narrowband communication path with the narrowband communication module of the LCD shelf label through the narrowband base station;
receiving, by the server, a normal heartbeat reported by the LCD shelf label through the narrowband communication path, and making, by the server, a product registration for the LCD shelf label base on the normal heartbeat; and
issuing, by the server, network configuration information to the LCD shelf label through the narrowband communication path, so that the LCD shelf label configures a broadband network according to the network configuration information.

6. An LCD shelf label, comprising:
a narrowband communication module, a message gateway, a broadband communication module and a controller;
the narrowband communication module is configured to receive a target IP address, a non-numerical information download address and a numerical information sent by a server through a narrowband base station;
the message gateway is connected to the narrowband communication module, the broadband communication module and the controller, respectively, and is configured to start up the broadband communication module according to the target IP address, and send the non-numerical information download address and the numerical information that have been performed with a data conversion respectively to the controller; and
the broadband communication module is configured to establish a broadband communication path with the server through a broadband base station according to the target IP address, so that the controller acquires non-numerical update information from the server according to the non-numerical information download address.

7. The LCD shelf label according to claim 6, further comprising a transparent transmission module, which is connected to the narrowband communication module and the message gateway, respectively, and is configured to perform a data transparent transmission between the message gateway and the narrowband communication module according to an UART-based near field communication protocol.

8. The LCD shelf label according to claim 6 or 7, wherein the narrowband communication module comprises an ESL module or a Zigbee module.

9. The LCD shelf label according to claim 6 or 7, wherein the broadband communication module comprises a WIFI module.

10. An LCD shelf label system, comprising:
the LCD shelf label according to any one of claims 6-9, a narrowband base station, a broadband base station and a server;
the server is configured to establish a narrowband communication path with the narrowband communication module of the LCD shelf label through the narrowband base station, select one target IP address from an IP management pool when receiving a non-numerical information update instruction, and send the target IP address and the non-numerical information download address in the non-numerical information update instruction to the LCD shelf label through the narrowband communication path; and
the LCD shelf label is configured to establish a broadband communication path with the server through the broadband base station according to the target IP address, download non-numerical update information from the server through the broadband communication path according to the non-numerical information download address, and release the target IP address so that the server puts the target IP address into the IP management pool.
